# EUROPEAN PATENT APPLICATION

(11) **EP 4 668 457 A1**
(43) Date of publication of application: **24.12.2025**
(21) Application number: 23932841.2
(22) Date of filing: 14.12.2023
(51) Int. Cl.: H01M 50/457, H01M 10/0525

(54) **DIAPHRAGM AND MANUFACTURING METHOD THEREFOR, AND ELECTRODE ASSEMBLY, BATTERY CELL, BATTERY AND ELECTRIC DEVICE**

(30) Priority: 11.04.2023 CN 202310383604
(71) Applicant: Contemporary Amperex Technology Co., Limited, Ningde, Fujian 352100 (CN)
(72) Inventor: XIA, Zhonghui, Ningde, Fujian 352100 (CN); WANG, Zhaoguang, Ningde, Fujian 352100 (CN); YANG, Jianrui, Ningde, Fujian 352100 (CN); WANG, Yaohui, Ningde, Fujian 352100 (CN); SUN, Chengdong, Ningde, Fujian 352100 (CN); HUANG, Siying, Ningde, Fujian 352100 (CN); OUYANG, Chuying, Ningde, Fujian 352100 (CN)
(74) Representative: Gong, Jinping
(86) International application number: PCT/CN2023/138902
(87) International publication number: WO 2024/212570

(57) **Abstract**

Disclosed in the present application are a diaphragm and a manufacturing method therefor, and an electrode assembly, a battery cell, a battery and an electric device. The diaphragm comprises at least two layers of base membranes and at least one functional layer, wherein the functional layer is arranged between two adjacent base membranes, and the functional layer comprises a piezoelectric material. In the technical solution of the present application, the conductivity is increased, and the strength of the diaphragm is also improved by fixing the position of a piezoelectric material by means of two base layers of membranes and by means of the adhesion of a functional layer, which is sandwiched between the base membranes.

## Description

### RELATED APPLICATION

The present application claims priority to Chinese Patent Application No. 202310383604.8 filed on April 11, 2023, the content of which is incorporated herein by reference in its entirety.

The present application claims priority to Chinese Patent Application No. 202310383604.8 filed on April 11, 2023, the content of which is incorporated herein by reference in its entirety.

### TECHNICAL FIELD

The present application relates to the technical field of lithium-ion batteries, and in particular, to a separator and a preparation method therefor, an electrode assembly, a battery cell, a battery, and an electric device.

### BACKGROUND

In the related art, during the charging and discharging of lithium-ion batteries, lithium ions need to pass through the separator. However, during their migration, the lithium ions are easily blocked by the separator when passing through the separator, which reduces the passing probability of the lithium ions. As a result, the charging and discharging performance of the lithium-ion battery is reduced.

A primary objective of the present application is to provide a separator, to improve the charging and discharging performance of the lithium-ion battery.

In order to achieve the above objective, the present application provides a separator. The separator includes at least two base films and at least one functional layer. The functional layer is disposed between two adjacent base films. The functional layer includes a piezoelectric material.

In the technical solution of the present application, by disposing the piezoelectric material between the two base films, the piezoelectric material generates a spontaneously polarized electric field under a pressure or an external electric field. Therefore, when passing through the separator, lithium ions can easily penetrate through the base film under the driving of the electric field, thereby improving the ionic conductivity as well as the charging and discharging capabilities of a lithium battery. Disposing the two or more base films with the functional layer disposed between the two adjacent base films is intended to improve the strength of the separator by means of the fixing effect of a double-layer base film for a position of the piezoelectric material and the adhesive effect of the functional layer sandwiched between the base films while the electrical conductivity is improved.

In some embodiments of the present application, the piezoelectric material includes a piezoelectric nanomaterial.

In the technical solution of the present application, the piezoelectric material may include the piezoelectric nanomaterial. The piezoelectric nanomaterial is intended to reduce a thickness of the separator on the premise of increasing the strength of an electric field produced after pressure polarization or electric field polarization, reduce a thickness of an electrode assembly after the separator is processed, and improve the back-and-forth transfer efficiency of Li⁺ in the electrode assembly.

In some embodiments of the present application, the piezoelectric nanomaterial includes a piezoelectric nanomaterial having a core-shell structure and/or a piezoelectric nanomaterial having a fiber structure.

In the technical solution of the present application, the piezoelectric nanomaterial includes the piezoelectric nanomaterial having the core-shell structure and/or the piezoelectric nanomaterial having the fiber structure. The piezoelectric nanomaterial having the core-shell structure can reduce the possibility that the piezoelectric nanomaterial having the core-shell structure is in contact with electrolytic solution during the cyclic charging and discharging of the electrode assembly, increase the oxidation resistance and corrosion resistance of the piezoelectric nanomaterial having the core-shell structure, improve the strength of the separator, and reduce the risk of a short circuit of the electrode assembly. The piezoelectric nanomaterial having the core-shell structure is in the form of particles, and the piezoelectric nanomaterial having the fiber structure may be prepared into a film. The piezoelectric nanomaterial having the core-shell structure and the piezoelectric nanomaterial having the fiber structure form a globally disordered structure with electric-field-accelerated micro space after pressure polarization. As such, the transfer efficiency of Li⁺ in the electrode assembly is improved, thereby improving the charging and discharging performance of the lithium-ion battery. In addition, for both the piezoelectric nanomaterial having the core-shell structure and/or the piezoelectric nanomaterial having the fiber structure, because the functional layer is globally disordered, in a cyclic charging or discharging process, the transmission efficiency of Li⁺ remains nearly identical during charging and discharging, thereby enhancing the overall transmission efficiency of Li⁺.

In some embodiments of the present application, a core material of the piezoelectric nanomaterial having the core-shell structure includes at least one of quartz single crystal, LiNbO₃, ZnO, CdS, SrBi₄Ti₄O₁₅, ZnSnO₃, BaTiO₃, and graphite phase carbon nitride, and a shell material of the core-shell structure includes at least one of silicon dioxide, graphene, epoxy resin, agar, and carboxymethyl cellulose.

In the technical solution of the present application, the above materials can provide an electric field for Li⁺ through pressure polarization, such that the transfer efficiency of Li⁺ in the electrode assembly is enhanced, thereby improving the charging and discharging performance of the lithium-ion battery. Wrapping the core material with the flexible shell material can reduce the possibility that the core material is in contact with the electrolytic solution, thereby increasing the oxidation resistance and corrosion resistance of the piezoelectric nanomaterial having the core-shell structure. The quartz single crystal has no volumetric deformation piezoelectric effect, but has a certain degree of thickness-shear mode piezoelectric effect and length-shear mode piezoelectric effect. The piezoelectric coefficient of the quartz single crystal is smaller than the piezoelectric coefficient of the above materials. The piezoelectric performance of LiNbO₃, ZnO, CdS, SrBi₄Ti₄O₁₅, ZnSnO₃, and BaTiO₃ is superior to the piezoelectric performance of the quartz single crystal, but the piezoelectric performance of graphite phase carbon nitride is optimal. Silicon dioxide, graphene, epoxy resin, agar, and carboxymethyl cellulose have no piezoelectric performance, and can be used as flexible materials to wrap the core material. An electromagnetic shielding effect value of silicon dioxide is minimum, while electromagnetic shielding effect values of the rest four flexible materials (i.e., graphene, epoxy resin, agar, and carboxymethyl cellulose) are close to each other.

In some embodiments of the present application, the nanomaterial having the fiber structure includes at least one of quartz single crystal, LiNbO₃, ZnO, CdS, SrBi₄Ti₄O₁₅, ZnSnO₃, BaTiO₃, and graphite phase carbon nitride.

In the technical solution of the present application, the above material can provide an electric field for Li⁺ through pressure polarization, such that the transfer efficiency of Li⁺ in the electrode assembly is enhanced, thereby improving the charging and discharging performance of the lithium-ion battery. After an external force is removed, the transfer efficiency of Li⁺ in the electrode assembly is improved, without increasing the risk of the short circuit of the electrode assembly. In addition, because the functional layer is globally disordered, in the cyclic charging or discharging process, the transmission efficiency of Li⁺ remains nearly identical during charging and discharging, thereby enhancing the overall transmission efficiency of Li⁺. The quartz single crystal has no volumetric deformation piezoelectric effect, but has a certain degree of thickness-shear mode piezoelectric effect and length-shear mode piezoelectric effect. The piezoelectric coefficient of the quartz single crystal is smaller than the piezoelectric coefficient of the above materials. The piezoelectric performance of LiNbO₃, ZnO, CdS, SrBi₄Ti₄O₁₅, ZnSnO₃, and BaTiO₃ is superior to the piezoelectric performance of the quartz single crystal, but the piezoelectric performance of graphite phase carbon nitride is optimal. Silicon dioxide, graphene, epoxy resin, agar, and carboxymethyl cellulose have no piezoelectric performance, and can be used as flexible materials to wrap the core material. An electromagnetic shielding effect value of silicon dioxide is minimum, while electromagnetic shielding effect values of the rest four flexible materials (i.e., graphene, epoxy resin, agar, and carboxymethyl cellulose) are close to each other.

In some embodiments of the present application, a thickness of the shell material of the core-shell structure is 0.3 µm to 0.5 µm, and a particle size of the core material of the core-shell structure is 0.2 µm to 0.49 µm.

In the technical solution of the present application, when the thickness of the shell material is between 0.3 µm and 0.5 µm, the oxidation resistance and the corrosion resistance are good, the strength of the separator can be improved, and the risk of weakening the electric field inside the core material that is used as the piezoelectric material, due to excessive thickness of the shell material, is minimized. For example, the thickness of the shell material may be 0.3 µm, 0.4 µm, or 0.5 µm. When the particle size of the shell material of the core-shell structure is 0.2 µm to 0.49 µm, the piezoelectric performance is optimal. For example, the particle size of the shell material may be 0.2 µm, 0.3 µm, 0.4 µm, or 0.49 µm.

In some embodiments of the present application, a specific surface area of the piezoelectric nanomaterial is greater than 200 m²/g.

In the technical solution of the present application, when the specific surface area of the piezoelectric nanomaterial is greater than 200 m²/g, a single nano unit of the piezoelectric nanomaterial, such as a particle and/or a fiber, has a smaller volume, allowing the electrolytic solution containing Li⁺ to more easily permeate into the separator. This can reduce the resistance of the single nano unit of the piezoelectric nanomaterial to the mass transfer of the electrolytic solution containing Li⁺. When less piezoelectric nanomaterial is used, the separator is thinner. Therefore, a larger specific surface area of the piezoelectric nanomaterial is preferable. However, in general, a specific surface area less than 500 m²/g is sufficient to ensure the performance of the separator in the present application. For example, the specific surface area may be 200 m²/g, 300 m²/g, 400 m²/g, or 500 m²/g.

In some embodiments of the present application, three base films and two functional layers are disposed, and one functional layer is sandwiched between two base films.

In the technical solution of the present application, the use of the above number of base films can further improve the charging and discharging performance of the lithium-ion battery.

In some embodiments of the present application, a thickness of the base film is 3 µm to 7 µm, and a thickness of the functional layer is 0.5 µm to 2 µm.

In the technical solution of the present application, when the thickness of the base film is 3 µm to 7 µm, this range can lower a risk of separator strength degradation caused by insufficient thickness of the base film, and also reduce the influence on the mass transfer of Li⁺ caused by excessive internal resistance of the electrode assembly due to excessive thickness of the base film. For example, the thickness of the base film may be 3 µm, 4 µm, 5 µm, or 7 µm. When the thickness of the functional layer is 0.5 µm to 2 µm, the electric field generated in the functional layer provides an appropriate acceleration to Li⁺, and the strength of the separator is appropriate. For example, the thickness of the functional layer may be 0.5 µm, 1 µm, 1.5 µm, or 2 µm.

In some embodiments of the present application, a porosity of the base film is 25% to 70%.

In the technical solution of the present application, when the porosity of the base film is 30% to 70%, this range can lower the risk of the separator strength degradation caused by excessive pores, and reduce the resistance to the mass transfer of the electrolytic solution caused by insufficient pores, which could otherwise compromise the mass transfer efficiency of Li⁺. For example, the porosity of the base film may be 25%, 30%, 40%, 50%, 60%, or 70%.

In some embodiments of the present application, a porosity of the base film is 30% to 65%.

In the technical solution of the present application, when the porosity of the base film is 30% to 65%, this range can further lower the risk of the separator strength degradation caused by excessive pores, and further reduce the resistance to the mass transfer of the electrolytic solution caused by insufficient pores, which could otherwise compromise the mass transfer efficiency of Li⁺. For example, the porosity of the base film may be 30%, 40%, 50%, 60%, or 65%.

In some embodiments of the present application, a pore size of the base film is 100 nm to 800 nm.

In the technical solution of the present application, when the pore size of the base film is 100 nm to 800 nm, this range can lower the risk of the separator strength degradation caused by insufficient thickness of the base film due to oversized pores, and reduce the resistance to the mass transfer of the electrolytic solution due to undersized pores, which could otherwise compromise the mass transfer efficiency of Li⁺. For example, the pore size of the base film may be 100 nm, 200 nm, 300 nm, 400 nm, 500 nm, 600 nm, 700 nm, or 800 nm.

In some embodiments of the present application, a material of the base film includes at least one of polyolefin, polyether, polyetheretherketone, polyimide, a polyethylene-propylene copolymer, and a fluorocarbon compound.

In the technical solution of the present application, the above base film materials all exhibit high temperature resistance, corrosion resistance, and good electrical insulation, such that these base film materials can be used as base films of the separator.

In some embodiments of the present application, the fluorocarbon compound includes at least one of polytetrafluoroethylene, polyvinyl fluoride, polyvinylidene fluoride, and polyvinylidene chloride.

In the technical solution of the present application, the above fluorocarbon compound materials all exhibit high temperature resistance, corrosion resistance, and good electrical insulation. In addition, high polarity and high dielectric constant facilitate the ionization of lithium salts and allow these materials to swell in the electrolytic solution.

In some embodiments of the present application, the separator further includes an adhesive layer, the adhesive layer bonds the functional layer and the base film, a weight of the functional layer accounts for 30% to 50% of a weight of the separator, a weight of the binder accounts for 10% to 20% of the weight of the separator, and a surface density of the separator is 2 g/m² to 10 g/m².

In the technical solution of the present application, when the weight of the functional layer accounts for 30% to 50% of the weight of the separator, for example, 30%, 40%, or 50%, and the weight of the binder accounts for 10% to 20% of the weight of the separator, for example, 10%, 15%, or 20%, the falling-off of the piezoelectric material on the functional layer can be reduced while the transfer efficiency of Li⁺ in the electrode assembly is improved to a proper value through the piezoelectric effect, thereby maintaining the performance stability of the separator during the long-term cyclic charging and discharging. The surface density of the separator is 2 g/m² to 10 g/m², for example, 2 g/m², 3 g/m², 4 g/m², 5 g/m², 6 g/m², 7 g/m², 8 g/m², 9 g/m², or 10 g/m².

In some embodiments of the present application, an air permeability of the separator is 300 s/100 cc to 500 s/100 cc.

In the technical solution of the present application, when the air permeability of the separator is 300 s/100 cc to 500 s/100 cc, this range can reduce the decrease in the mass transfer efficiency of Li⁺ caused by excessive pore tortuosity of the separator, which could otherwise compromise the charging and discharging performance of the lithium-ion battery. When the pore tortuosity of the separator is minimum, the air permeability is 300 s/100cc. For example, the air permeability of the separator may be 300 s/100 cc, 400 s/100 cc, or 500 s/100 cc.

In some embodiments of the present application, a weight of the piezoelectric nanomaterial is 30% to 80% of the weight of the functional layer.

In the technical solution of the present application, when the weight of the piezoelectric nanomaterial is 30% to 80% of the weight of the functional layer, the ionic conductivity of the separator is appropriate, and the risk of the separator strength degradation is reduced. For example, the weight of the piezoelectric nanomaterial may be 30%, 40%, 50%, 60%, 70%, or 80%.

The present application further provides a preparation method for the separator according to the above technical solution. The method includes the following steps:
preparing a base film and a functional layer, and attaching the functional layer to a surface of the base film; and
compounding the base film and the functional layer in a pressurization manner.

In the technical solution of the present application, for example, when the functional layer includes piezoelectric ceramic, the preparation method includes: performing dissolution and complexation of a piezoelectric precursor, performing fiber drawing using a hydrolyzed sol-gel, compounding the prepared piezoelectric ceramic fibers into the functional layer, and attaching the functional layer to the surface of the base film. Alternatively, when the functional layer includes the piezoelectric nanomaterial, the piezoelectric nanomaterial may be applied on the surface of the base film. The functional layer and the base film are compounded in the pressurization manner. After pressure polarization, a single piezoelectric material unit of a piezoelectric material in the functional layer forms an accelerating electric field for Li⁺ in the micro space under pressurization. In addition, because the functional layer is globally disordered, in the cyclic charging or discharging process, the transmission efficiency of Li⁺ remains nearly identical during charging and discharging, thereby enhancing the overall transmission efficiency of Li⁺.

In some embodiments of the present application, the pressurization manner is hot pressing or cold pressing.

In the technical solution of the present application, during pressurization, pressure may be directly applied to the separator. Alternatively, pressure may not be first applied to the separator. In the process of assembling the separator into the electrode assembly, the electrode assembly is shaped through hot pressing and/or cold pressing, such that the separator undergoes pressure polarization. Consequently, Li⁺ takes the single piezoelectric material unit as a springboard in the micro space, and accelerates to pass through the separator under an electric field force of the accelerating electric field. In addition, because the functional layer is globally disordered, in the cyclic charging or discharging process, the transmission efficiency of Li⁺ remains nearly identical during charging and discharging, thereby enhancing the overall transmission efficiency of Li⁺.

In some embodiments of the present application, a manner of attaching the functional layer to the surface of the base film includes coating, electrostatic spinning, or directly covering a film-shaped functional layer on the surface of the base film.

In the technical solution of the present application, the manner of attaching the functional layer to the surface of the base film includes coating, electrostatic spinning, or directly covering a film-shaped functional layer on the surface of the base film. The coating method includes gravure coating or microgravure coating. The electrostatic spinning method includes single-needle electrostatic spinning, dual-needle electrostatic spinning, multi-needle electrostatic spinning, rotary disk electrostatic spinning, coaxial electrostatic spinning, or needle-less electrostatic spinning.

The present application further provides an electrode assembly including the separator according to the above technical solution.

The present application further provides a battery cell including the electrode assembly according to the above technical solution.

The present application further provides a battery including the battery cell according to the above technical solution.

The present application further provides an electric device including the battery according to the above technical solution.

In the technical solution of the present application, by disposing the piezoelectric material between the two base films, the piezoelectric material generates a spontaneously polarized electric field under a pressure or an external electric field. Therefore, when passing through the separator, lithium ions can easily penetrate through the base film under the driving of the electric field, thereby improving the ionic conductivity as well as the charging and discharging capabilities of a lithium battery. Disposing the two or more base films with the functional layer disposed between the two adjacent base films is intended to reduce the risk of the short circuit of the electrode assembly caused by the separator strength degradation by means of the fixing effect of a double-layer base film for a position of the piezoelectric material while the electrical conductivity is improved.

### BRIEF DESCRIPTION OF THE DRAWINGS

To more clearly illustrate the technical solutions in the embodiments of the present application or in the related art, the drawings required for illustrating the embodiments or description of the related art are briefly described below. Apparently, the drawings in the following description illustrate merely some embodiments of the present application, and those of ordinary skill in the art may still derive other drawings from the structures illustrated in these drawings without creative efforts.

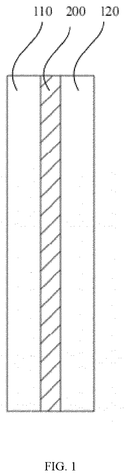

FIG. 1 is a schematic diagram of a structure of a separator according to one or more embodiments.

Description of the reference numerals:

| Reference numeral | Name | Reference numeral | Name |
|---|---|---|---|
| 110 | First base film | 200 | Functional layer |
| 120 | Second base film | | |

The realization of the object, the functional features, and the advantages of the present application will be further described with reference to the drawings.

### DETAILED DESCRIPTION

The technical solutions in the embodiments of the present application will be clearly and completely described hereinafter with reference to the drawings in the embodiments of the present application. It is apparent that the described embodiments are only some, but not all, embodiments of the present application. Based on the embodiments in the present application, all other embodiments obtained by those of ordinary skill in the art without creative work shall fall within the protection scope of the present application.

It should be noted that all directional indications (such as up, down, left, right, front, and rear) involved in the embodiments of the present application are only used for explaining the relative position relationship between the components, the motion situation, and the like under a certain posture (as shown in the drawing), and if the certain posture is changed, the directional indications are changed accordingly.

In addition, the terms "first", "second", and the like in the present application are used for descriptive purposes only and are not to be construed as indicating or implying relative importance or to implicitly indicate the number of technical features indicated. Thus, a feature defined by "first" or "second" may explicitly or implicitly show that at least one such feature is included. In addition, technical solutions between the embodiments may be combined with each other, but the combining must be based on the premise that it can be realized by those of ordinary skill in the art. When a combination of technical solutions results in contradiction or cannot be realized, such a combination of technical solutions should not be considered to exist and shall not fall within the protection scope of the present application.

Hereinafter, implementations of the separator, the electrode assembly, the battery cell, the battery, and the electric device in the present application are explained in detail and specifically disclosed. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all implementations and optional implementations of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order. For example, the method may include steps (a), (b), and (c), or steps (a), (c), and (b), or steps (c), (a), and (b), or the like.

A battery in the art includes a lithium-ion battery. At present, the lithium-ion battery is widely used in pure electric vehicles and hybrid electric vehicles.

A battery cell includes a positive electrode plate, a negative electrode plate, electrolytic solution, and a separator. A lithium-ion battery cell primarily works by the movement of lithium ions between the positive electrode plate and the negative electrode plate.

After slurry coating, drying, and rolling, a secondary battery electrode plate forms a current collector and a multi-layer composite structure on at least one surface of the current collector.

The separator is a material for isolating a positive electrode and a negative electrode of the battery, and is intended to avoid a short circuit of the battery.

The electrode assembly is a battery component including a positive electrode, a negative electrode, and a separator.

The battery cell, a basic unit for implementing the mutual conversion of chemical energy and electric energy, includes a positive electrode, a negative electrode, a separator, and electrolytic solution.

In the related art, the concept of an electric field is rarely described in the design of the separator and a multi-layer separator. The multi-layer separator can improve the heat resistance and strength of the separator by, for example, compounding multiple separators such as a polyethylene/polypropylene film. However, a thickness of a corresponding separator is increased, such that the air permeability of the compounded separator is seriously reduced, and the pore structure is blocked. This is not conducive to the transfer of the lithium ions in the battery.

During the charging and discharging of the lithium-ion battery, the lithium ions need to pass through the separator. However, during their migration, when the separator includes two or more base films, the lithium ions are easily blocked by the separator when passing through the separator, which reduces the passing probability of the lithium ions. As a result, the charging and discharging performance of the lithium-ion battery is reduced.

Therefore, a primary objective of the present application is to provide a separator, to improve the charging and discharging performance of the lithium-ion battery.

In order to achieve the above objective, the present application provides a separator. The separator includes at least two base films and at least one functional layer. The functional layer is disposed between two adjacent base films. The functional layer includes a piezoelectric material.

In the technical solution of the present application, by disposing the piezoelectric material between the two base films such as a first base film 110 and a second base film 120 shown in FIG. 1, the piezoelectric material generates a spontaneously polarized electric field under a pressure or an external electric field. Therefore, when passing through the separator, the lithium ions can easily penetrate through the base film under the driving of the electric field, thereby improving the ionic conductivity as well as the charging and discharging capabilities of a lithium battery. Disposing the two or more base films with the functional layer 200 disposed between the two adjacent base films is intended to improve the strength of the separator by means of the fixing effect of a double-layer base film for a position of the piezoelectric material and the adhesive effect of the functional layer sandwiched between the base films while the electrical conductivity is improved.

The mechanism of the piezoelectric effect is as follows: Because a crystal with piezoelectricity has low symmetry, when the crystal is deformed under the action of an external force, positive and negative ions in unit cells of the piezoelectric crystal generate a relative displacement, such that the positive and negative charge centers of the unit cells do not coincide. As a result, the crystal generates macroscopic polarization and an electric field. Because the surface density of charges on the surface of the crystal is equal to the projection of the external force polarization intensity on the crystal surface in a normal direction, different charges appear on two end surfaces when the piezoelectric material is deformed under the action of the pressure. Conversely, when the piezoelectric material is polarized in the electric field, the material is deformed due to the displacement of the charge center.

In some embodiments of the present application, the piezoelectric material includes a piezoelectric nanomaterial.

In the technical solution of the present application, the piezoelectric material may include the piezoelectric nanomaterial. The piezoelectric nanomaterial is intended to reduce a thickness of the separator on the premise of increasing the strength of the electric field produced after pressure polarization or electric field polarization, and reduce a thickness of the electrode assembly after the separator is processed. When undergoing pressure polarization, the piezoelectric nanomaterial is still globally disordered. However, in micro space, a single nano unit, such as a single particle of a nanomaterial having a core-shell structure and/or a single fiber of a piezoelectric nanomaterial having a fiber structure, forms a piezoelectric unit material. Therefore, Li⁺ can take the piezoelectric unit material as a springboard in the electrode assembly, and accelerate through an acceleration of an electric field generated by the piezoelectric unit material. In addition, because the functional layer is globally disordered, in the cyclic charging or discharging process, the transmission efficiency of Li⁺ remains nearly identical during charging and discharging, thereby enhancing the overall transmission efficiency of Li⁻.

In some embodiments of the present application, the piezoelectric nanomaterial includes a piezoelectric nanomaterial having a core-shell structure and/or a piezoelectric nanomaterial having a fiber structure.

In the technical solution of the present application, the piezoelectric nanomaterial includes the piezoelectric nanomaterial having the core-shell structure and/or the piezoelectric nanomaterial having the fiber structure. The piezoelectric nanomaterial having the core-shell structure reduces, by wrapping a flexible shell layer on a surface of a piezoelectric nanoparticle core material, the possibility that the piezoelectric nanomaterial having the core-shell structure is in contact with electrolytic solution during the cyclic charging and discharging of the electrode assembly, thereby increasing the oxidation resistance and corrosion resistance of the piezoelectric nanomaterial having the core-shell structure. The piezoelectric nanomaterial having the core-shell structure is in the form of particles, and can form a globally disordered structure with electric-field-accelerated micro space after pressure polarization. As such, the risk of a short circuit of the electrode assembly is not increased while the transfer efficiency of Li⁺ in the electrode assembly is improved. The piezoelectric nanomaterial having the fiber structure can be prepared into a film, and forms a globally disordered structure with electric-field-accelerated micro space after pressure polarization. As such, the transfer efficiency of Li⁺ in the electrode assembly is improved, thereby improving the charging and discharging performance of the lithium-ion battery. In addition, for both the piezoelectric nanomaterial having the core-shell structure or the piezoelectric nanomaterial having the fiber structure, because the functional layer is globally disordered, the electric field in the micro space may serve as a springboard for Li⁺. During the cyclic charging or discharging process, the transmission efficiency of Li⁺ remains nearly identical during charging and discharging, thereby enhancing the overall transmission efficiency of Li⁺.

In some embodiments of the present application, a core material of the piezoelectric nanomaterial having the core-shell structure includes at least one of quartz single crystal, LiNbO₃, ZnO, CdS, SrBi₄Ti₄O₁₅, ZnSnO₃, BaTiO₃, and graphite phase carbon nitride, and a shell material of the core-shell structure includes at least one of silicon dioxide, graphene, epoxy resin, agar, and carboxymethyl cellulose.

In the technical solution of the present application, after the external force is removed, the piezoelectric nanomaterial, in the form of particles, enables each particle to generate a micro electric field under pressure, such that the functional layer can form a globally disordered structure with electric-field-accelerated micro space. Therefore, Li⁺ takes the micro electric field as a springboard to improve the transfer efficiency in the electrode assembly, thereby improving the charging and discharging performance of the lithium-ion battery. Wrapping the core material with the flexible shell material can reduce the risk of the separator strength degradation, and reduce the possibility that the core material is in contact with the electrolytic solution, thereby increasing the oxidation resistance and corrosion resistance of the piezoelectric nanomaterial having the core-shell structure. The quartz single crystal has no volumetric deformation piezoelectric effect, but has a certain degree of thickness-shear mode piezoelectric effect and length-shear mode piezoelectric effect. The piezoelectric coefficient of the quartz single crystal is smaller than the piezoelectric coefficient of the above materials. The piezoelectric performance of LiNbO₃, ZnO, CdS, SrBi₄Ti₄O₁₅, ZnSnO₃, and BaTiO₃ is superior to the piezoelectric performance of the quartz single crystal, but the piezoelectric performance of graphite phase carbon nitride is optimal. Silicon dioxide, graphene, epoxy resin, agar, and carboxymethyl cellulose have no piezoelectric performance, and can be used as flexible materials to wrap the core material. An electromagnetic shielding effect value of carbon dioxide silicon is minimum, while electromagnetic shielding effect values of the rest four flexible materials (i.e., graphene, epoxy resin, agar, and carboxymethyl cellulose) are close to each other.

In some embodiments of the present application, the nanomaterial having the fiber structure includes at least one of quartz single crystal, LiNbO₃, ZnO, CdS, SrBi₄Ti₄O₁₅, ZnSnO₃, BaTiO₃, and graphite phase carbon nitride.

In the technical solution of the present application, after the external force is removed, the piezoelectric nanomaterial, in the form of fibers, enables each fiber to generate a micro electric field under pressure, such that the functional layer can form a globally disordered structure with electric-field-accelerated micro space. Therefore, Li⁺ takes the micro electric field as a springboard to improve the transfer efficiency in the electrode assembly, without increasing the risk of the short circuit of the electrode assembly. In addition, because the functional layer is globally disordered, in the cyclic charging or discharging process, the transmission efficiency of Li⁺ remains nearly identical during charging and discharging, thereby enhancing the overall transmission efficiency of Li⁺. The quartz single crystal has no volumetric deformation piezoelectric effect, but has a certain degree of thickness-shear mode piezoelectric effect and length-shear mode piezoelectric effect. The piezoelectric coefficient of the quartz single crystal is smaller than the piezoelectric coefficient of the above materials. The piezoelectric performance of LiNbO₃, ZnO, CdS, SrBi₄Ti₄O₁₅, ZnSnO₃, and BaTiO₃ is superior to the piezoelectric performance of the quartz single crystal, but the piezoelectric performance of graphite phase carbon nitride is optimal. A molecular structure of the graphite phase carbon nitride is a central asymmetric structure of triazine/heptazine. When a mechanical external force is received, the charge center of the crystal is shifted, such that equal and opposite charges appear on the surface along a crystallographic axis direction, thereby generating a built-in electric field. During the charging and discharging of the battery, Li⁺ with positive charges is accelerated by an acceleration of the electric field to quickly pass through the separator, such that the ionic conductivity of the battery is improved by more than 10%. Silicon dioxide, graphene, epoxy resin, agar, and carboxymethyl cellulose have no piezoelectric performance, and can be used as flexible materials to wrap the core material. An electromagnetic shielding effect value of silicon dioxide is minimum, while electromagnetic shielding effect values of the rest four flexible materials (i.e., graphene, epoxy resin, agar, and carboxymethyl cellulose) are close to each other.

In some embodiments of the present application, a thickness of the shell material of the core-shell structure is 0.3 µm to 0.5 µm, and a particle size of the core material of the core-shell structure is 0.2 µm to 0.49 µm.

In the technical solution of the present application, when the thickness of the shell material is between 0.3 µm and 0.5 µm, because the thickness of the shell layer is sufficient to prevent the electrolytic solution from permeating into a shell layer, the oxidation resistance and corrosion resistance are optimal. In addition, the risk of the separator strength degradation can be reduced due to the thickness of the shell layer, and the risk of weakening the electric field inside the core material that is used as the piezoelectric material, due to excessive thickness of the shell material, is reduced. For example, the thickness of the shell material may be 0.3 µm, 0.4 µm, or 0.5 µm. The particle size of the shell material of the core-shell structure is 0.2 µm to 0.49 µm.

In some embodiments of the present application, a specific surface area of the piezoelectric nanomaterial is greater than 200 m²/g.

In the technical solution of the present application, when the specific surface area of the piezoelectric nanomaterial is greater than 200 m²/g, a single nano unit of the piezoelectric nanomaterial, such as a particle and/or a fiber, has a smaller volume, allowing the electrolytic solution containing Li⁺ to more easily permeate into the separator. This can reduce the resistance of the single nano unit of the piezoelectric nanomaterial to the mass transfer of the electrolytic solution containing Li⁺. When less piezoelectric nanomaterial is used, the separator is thinner. Therefore, a larger specific surface area of the piezoelectric nanomaterial is preferable. However, in general, a specific surface area less than 500 m²/g is sufficient to ensure the performance of the separator in the present application. For example, the specific surface area may be 200 m²/g, 300 m²/g, 400 m²/g, or 500 m²/g.

In some embodiments of the present application, three base films and two functional layers are disposed, and one functional layer is sandwiched between two base films.

In the technical solution of the present application, because the three base films are sufficient to ensure the strength of the separator, and the two functional layers can provide a sufficient acceleration for Li⁺ through the electric field in the micro space, the charging and discharging performance of the lithium-ion battery can be further improved by using the foregoing number of base films and functional layers. Because each functional layer is uniquely sandwiched between two base films, the functional layer is fixed, thereby reducing the risk of the separator strength degradation.

In some embodiments of the present application, a thickness of the base film is 3 µm to 7 µm, and a thickness of the functional layer is 0.5 µm to 2 µm.

In the technical solution of the present application, when the thickness of the base film is 3 µm to 7 µm, this range can lower the risk of the short circuit of the electrode assembly caused by the separator strength degradation due to insufficient thickness of the base film, and also reduce the influence on the mass transfer of Li⁺ caused by an excessive internal resistance of the electrode assembly due to excessive thickness of the base film. For example, the thickness of the base film may be 3 µm, 4 µm, 5 µm, or 7 µm. When the thickness of the functional layer is 0.5 µm to 2 µm, the electric field generated in the functional layer provides an appropriate acceleration to Li⁺, and the risk of the separator strength degradation is reduced. For example, the thickness of the functional layer may be 0.5 µm, 1 µm, 1.5 µm, or 2 µm.

In some embodiments of the present application, a porosity of the base film is 25% to 70%.

In the technical solution of the present application, when the porosity of the base film is 25% to 70%, this range can lower the risk of the separator strength degradation caused by insufficient thickness of the base film due to excessive pores, and also reduce the resistance to the mass transfer of the electrolytic solution due to insufficient pores, which could otherwise compromise the mass transfer efficiency of Li⁺. For example, the porosity of the base film may be 25%, 30%, 40%, 50%, 60%, or 70%.

In some embodiments of the present application, a porosity of the base film is 30% to 65%.

In the technical solution of the present application, when the porosity of the base film is 30% to 65%, this range can further lower the risk of the separator strength degradation caused by insufficient thickness of the base film due to excessive pores, and also further reduce the resistance to the mass transfer of the electrolytic solution due to insufficient pores, which could otherwise compromise the mass transfer efficiency of Li⁺. For example, the porosity of the base film may be 30%, 40%, 50%, 60%, or 65%.

In some embodiments of the present application, a pore size of the base film is 100 nm to 800 nm.

In the technical solution of the present application, when the pore size of the base film is 100 nm to 800 nm, this range can lower the risk of the separator strength degradation caused by insufficient thickness of the base film due to oversized pores, and also reduce the resistance to the mass transfer of the electrolytic solution due to undersized pores, which could otherwise compromise the mass transfer efficiency of Li⁺. For example, the pore size of the base film may be 100 nm, 200 nm, 300 nm, 400 nm, 500 nm, 600 nm, 700 nm, or 800 nm.

In some embodiments of the present application, a material of the base film includes at least one of polyolefin, polyether, polyetheretherketone, polyimide, a polyethylene-propylene copolymer, and a fluorocarbon compound.

In the technical solution of the present application, the above base film materials all exhibit high temperature resistance, corrosion resistance, and good electrical insulation, such that these base film materials can be used as base films of the separator.

In some embodiments of the present application, the fluorocarbon compound includes at least one of polytetrafluoroethylene, polyvinyl fluoride, polyvinylidene fluoride, and polyvinylidene chloride.

In the technical solution of the present application, the above fluorocarbon compound materials all exhibit high temperature resistance, corrosion resistance, and good electrical insulation. In addition, high polarity and high dielectric constant facilitate the ionization of lithium salts and allow these materials to swell in the electrolytic solution.

In some embodiments of the present application, the separator further includes an adhesive layer, the adhesive layer bonds the functional layer and the base film, a weight of the functional layer accounts for 30% to 50% of a weight of the separator, a weight of the binder accounts for 10% to 20% of the weight of the separator, and a surface density of the separator is 2 g/m² to 10 g/m².

In the technical solution of the present application, when the weight of the functional layer accounts for 30% to 50% of the weight of the separator, for example, 30%, 40%, or 50%, and the weight of the binder accounts for 10% to 20% of the weight of the separator, for example, 10%, 15%, or 20%, the falling-off of the piezoelectric material on the functional layer can be reduced while the transfer efficiency of Li⁺ in the electrode assembly is improved to a proper value through the piezoelectric effect, thereby maintaining the performance stability of the separator during the long-term cyclic charging and discharging. The surface density of the separator is 2 g/m² to 10 g/m², for example, 2 g/m², 3 g/m², 4 g/m², 5 g/m², 6 g/m², 7 g/m², 8 g/m², 9 g/m², or 10 g/m².

In some embodiments of the present application, an air permeability of the separator is 300 s/100cc to 500 s/100 cc.

In the technical solution of the present application, when the air permeability of the separator is 300 s/100 cc to 500 s/100 cc, this range can reduce the decrease in the mass transfer efficiency of Li⁺ caused by excessive pore tortuosity of the separator, which could otherwise compromise the charging and discharging performance of the lithium-ion battery. When the pore tortuosity of the separator is minimum, the air permeability is 300 s/100cc. For example, the air permeability of the separator may be 300 s/100 cc, 400 s/100 cc, or 500 s/100 cc.

In some embodiments of the present application, a weight of the piezoelectric nanomaterial is 30% to 80% of the weight of the functional layer.

In the technical solution of the present application, when the weight of the piezoelectric nanomaterial is 30% to 80% of the weight of the functional layer, the ionic conductivity of the separator is appropriate, and the risk of the separator strength degradation is reduced. For example, the weight of the piezoelectric nanomaterial may be 30%, 40%, 50%, 60%, 70%, or 80%.

The present application further provides a preparation method for the separator according to the technical solution. The preparation method includes the following steps:
preparing a base film and a functional layer, and attaching the functional layer to a surface of the base film; and
compounding the base film and the functional layer in a pressurization manner.

In the technical solution of the present application, for example, when the functional layer includes piezoelectric ceramic, the preparation method includes: performing dissolution and complexation of a piezoelectric precursor, performing fiber drawing using a hydrolyzed sol-gel, compounding the prepared piezoelectric ceramic fibers into the functional layer, and attaching the functional layer to the surface of the base film. Alternatively, when the functional layer includes the piezoelectric nanomaterial, the piezoelectric nanomaterial may be applied on the surface of the base film. The functional layer and the base film are compounded in the pressurization manner. After pressure polarization, a single piezoelectric material unit of a piezoelectric material in the functional layer forms an accelerating electric field for Li⁺ in the micro space under pressurization. However, because the functional layer is globally disordered, in a cyclic charging or discharging process, the transmission efficiency of Li⁺ remains nearly identical during charging and discharging, thereby enhancing the overall transmission efficiency of Li⁺.

In some embodiments of the present application, the pressurization manner is hot pressing or cold pressing.

In the technical solution of the present application, during pressurization, pressure may be directly applied to the separator. Alternatively, pressure may not be first applied to the separator. In the process of assembling the separator into the electrode assembly, the electrode assembly is shaped through hot pressing and/or cold pressing, such that the separator undergoes pressure polarization. Consequently, Li⁺ takes the single piezoelectric material unit as a springboard in the micro space, and accelerates to pass through the separator under an electric field force of the accelerating electric field. In addition, because the functional layer is globally disordered, in the cyclic charging or discharging process, the resistance of Li⁺ remains nearly identical during charging and discharging.

In some embodiments of the present application, a manner of attaching the functional layer to the surface of the base film includes coating, electrostatic spinning, or directly covering a film-shaped functional layer on the surface of the base film.

In the technical solution of the present application, the manner of attaching the functional layer to the surface of the base film includes coating, electrostatic spinning, or directly covering a film-shaped functional layer on the surface of the base film. The electrostatic spinning method includes single-needle electrostatic spinning, dual-needle electrostatic spinning, multi-needle electrostatic spinning, rotary disk electrostatic spinning, coaxial electrostatic spinning, or needle-less electrostatic spinning.

The present application further provides an electrode assembly including the separator according to the above technical solution.

Since the electrode assembly adopts all the technical solutions of all the foregoing embodiments, the electrode assembly at least has all the beneficial effects brought by the technical solutions of the foregoing embodiments, which will not be described herein again.

The present application further provides a battery cell including the electrode assembly according to the above technical solution.

Since the battery cell adopts all the technical solutions of all the foregoing examples, the battery cell at least has all the beneficial effects brought by the technical solutions of the foregoing examples, which will not be described herein again.

The present application further provides a battery including the battery cell according to the above technical solution.

Since the battery adopts all the technical solutions of all the foregoing examples, the battery at least has all the beneficial effects brought by the technical solutions of the foregoing examples, which will not be described herein again.

The present application further provides an electric device including the battery according to the above technical solution.

Since the electric device adopts all the technical solutions of all the foregoing examples, the electric device at least has all the beneficial effects brought by the technical solutions of the foregoing examples, which will not be described herein again.

In the technical solution of the present application, because the functional layer including the piezoelectric material is disposed between the adjacent base films, the acceleration of Li⁺ is promoted by the internal electric field generated when the piezoelectric material is polarized. Disposing two or more base films with the functional layer disposed between the two adjacent base films is intended to reduce, through the protection of the base films, the risk of the short circuit of the electrode assembly caused by the separator strength degradation. In addition, because the piezoelectric material in the functional layer generates an electric field, the transfer efficiency of Li⁺ in the electrode assembly can be improved.

### Example 1

Two base films and one functional layer are disposed. The functional layer is graphite phase carbon nitride, a nanomaterial having a fiber structure, and has a diameter of 200 nm, an aspect ratio of 100, and a specific surface area of 235 m²/g. For the base film, a thickness is 5 µm, a porosity is 34% ± 3%, and an average pore size is 103 nm. A surface density of the separator is 2.6 g/m², a material of the base film is polyethylene, a thickness of the functional layer is 1 µm, a thickness of the separator is 11.2 µm, a weight of the functional layer accounts for 30% of a weight of the separator, a weight of an adhesive layer accounts for 10% of the weight of the separator, and a weight of the piezoelectric nanomaterial accounts for 30% of a total amount of the functional layer. A method for compounding the separator and the functional layer is compounding in a cold pressing manner after coating.

The ionic conductivity of the separator measured in Example 1 is 1.2×10⁻³ S/m, the transverse tensile strength of the separator is 1472 kg/cm², and the longitudinal tensile strength of the separator is 1228 kg/cm².

Examples 2 to 8 and Comparative Examples 1 and 2 are the same as Example 1 other than the differences shown in Tables 1 and 2.

**Table 1**

| | Example 1 | Comparative Example 1 | Comparative Example 2 |
|---|---|---|---|
| Quantity of base films | 2 | 1 | 2 |
| Quantity of functional layers | 1 | 1 | None |
| Type of piezoelectric material | Graphite phase carbon nitride, fiber structure | Graphite phase carbon nitride, bulk structure | None |
| Diameter of nanomaterial having fiber structure | 200nm | / | / |
| Aspect ratio of nanomaterial having fiber structure | 100 | / | / |
| Specific surface area of piezoelectric nanomaterial | 235m²/g | 158m²/g | None |
| Thickness of base film | 5µm | 5µm | 5µm |
| Porosity of base film | 34%±3% | 30% | 30% |
| Average pore size of base film | 103nm | 100nm | 100nm |
| Surface density of separator | 2.6g/m² | 3.51g/m² | 1.83g/m² |
| Material of base film | Polyethylene | Polyethylene | Polyethylene |
| Thickness of functional layer | 1µm | 5µm | None |
| Weight proportion of functional layer in separator | 30% | 30% | None |
| Weight proportion of adhesive layer in separator | 10% | 10% | None |
| Proportion of piezoelectric nanomaterial in functional layer | 30% | 30% | None |
| Method for compounding separator and functional layer | Compounding in a cold pressing manner, and coating | Blade coating | Compounding in a cold pressing manner |
| Transverse tensile strength of separator | 1472kg/cm² | 962kg/cm² | 759kg/cm² |
| Longitudinal tensile strength of separator | 1228kg/cm² | 739kg/cm² | 859kg/cm² |
| Ionic conductivity | 1.2×10⁻³S/m | 0.6×10⁻³S/m | 0.8×10⁻³S/m |

**Table 2**

| | Example 1 | Example 2 | Example 3 | Example 4 | Example 5 | Example 6 | Example 7 | Example 8 |
|---|---|---|---|---|---|---|---|---|
| Quantity of base films | 2 | 2 | 2 | 2 | 2 | 2 | 2 | 2 |
| Quantity of functional layers | 1 | 1 | 1 | 1 | 1 | 1 | 1 | 1 |
| Type of nanomaterial having fiber structure | Graphite phase carbon nitride | α-quartz | / | / | / | / | Quartz single crystal | Quartz single crystal |
| Diameter of nanomaterial having fiber structure | 200nm | 200nm | / | / | / | / | 200nm | 200nm |
| Aspect ratio of nanomaterial having fiber structure | 100 | 100 | / | / | / | / | 100 | 100 |
| Particle size of nanoparticle core material having core-shell structure | / | / | 0.2µm | 0.2µm | 0.49µm | 0.4 | / | / |
| Particle size of nanoparticle shell material having core-shell structure | / | / | 0.3µm | 0.3µm | 0.5µm | 0.4 | / | / |
| Type of core material | / | / | Quartz single crystal | Graphite phase carbon nitride | Graphite phase carbon nitride | CdS | / | / |
| Type of shell material | / | / | Graphene | Silicon dioxide | Agar | Agar | / | / |
| Type of polymeric nanomaterial | / | / | None | None | None | / | / | / |
| Specific surface area of piezoelectric nanomaterial | 235m²/g | 214m²/g | 239m²/g | 223m²/g | 217m²/g | 221m²/g | 234m²/g | 226m²/g |
| Thickness of base film | 5µm | 5µm | 5µm | 5µm | 5µm | 5µm | 5µm | 5µm |
| Porosity of base film | 34%±3% | 34%±3% | 33%±3% | 35%±3% | 31%±3% | 33%±3% | 34%±3% | 32%±3% |
| Average pore size of base film | 103nm | 121nm | 109nm | 106nm | 113nm | 112nm | 130nm | 117nm |
| Surface density of separator | 2.6g/m² | 2.7g/m² | 2.3g/m² | 2.4g/m² | 2.2g/m² | 2.4g/m² | 2.1g/m² | 4.8g/m² |
| Material of base film | Polyethylene | Polyethylene | Polyethylene | Polyethylene | Polyethylene | Polyethylene | Polytetrafluo -roethylene | Polytetrafluo -roethylene |
| Thickness of functional layer | 1µm | 1µm | 1µm | 1µm | 1µm | 2µm | 2µm | 2µm |
| Thickness of separator | 11.2µm | 11.4µm | 11.2µm | 10.9µm | 11.3µm | 12.1µm | 11.5µm | 12.4µm |
| Weight proportion of functional layer in separator | 30% | 30% | 30% | 30% | 30% | 30% | 30% | 40% |
| Weight proportion of adhesive layer in separator | 10% | 10% | 10% | 10% | 10% | 10% | 10% | 15% |
| Proportion of piezoelectric nanomaterial in functional layer | 30% | 30% | 30% | 30% | 30% | 30% | 30% | 60% |
| Method for compoundin g separator and functional layer | Compoundin g in a cold pressing manner, and coating | Compoundin g in a cold pressing manner, and coating | Compoundin g in a cold pressing manner, and coating | Compoundin g in a cold pressing manner, and coating | Compoundin g in a cold pressing manner, and coating | Compoundin g in a cold pressing manner, and coating | Compoundin g in a cold pressing manner, and coating | Compoundin g in a cold pressing manner, and coating |
| Transverse tensile strength of separator | 1472kg/cm² | 1273kg/cm² | 1538kg/cm² | 1381kg/cm² | 1463kg/cm² | 1471kg/cm² | 1149kg/cm² | 1482kg/cm² |
| Longitudinal tensile strength of separator | 1228kg/cm² | 1338kg/cm² | 1537kg/cm² | 1284kg/cm² | 1245kg/cm² | 1345kg/cm² | 1494kg/cm² | 1284kg/cm² |
| Ionic conductivity | 1.2×10⁻³S/m | 1.1×10⁻³S/m | 1.3×10⁻³S/m | 1.2×10⁻³S/m | 1.0×10⁻³S/m | 1.2×10⁻³S/m | 1.3×10⁻³S/m | 1.6×10⁻³S/m |

In Example 4, the two functional layers are separately disposed between two base films on a left side and between two base films on a right side.

Alternating-current impedance spectroscopy tests are performed on separators with different number of layers under constant voltage by using a Bio-logic electrochemical workstation. An intercept of an intersection of an impedance curve and a real part on a Nyquist diagram is taken as Rs, which is compared with an Rs parameter of a known standard conductivity sample, such that the ionic conductivity is obtained.

The method for compounding in a hot pressing manner is specifically to perform hot pressing on a cell including the separator at 80 °C and 1000 Mpa.

The method for compounding in a cold pressing manner is specifically to perform cold pressing on a cell including the separator at 3000 Mpa.

The coating method is specifically microgravure coating, where a diameter of a micro gravure roll is 20 mm to 60 mm, a diameter of a support roll is 60 mm, a thickness of a coating (wet glue) is 0.5 µm to 5 µm, and a viscosity of glue solution is 50 cps to 500 cps.

In Example 1, the piezoelectric material is fibrous graphite phase carbon nitride, and one piezoelectric material is sandwiched between two base films.

A difference between Example 2 and Example 1 lies in that the fibrous graphite phase carbon nitride in Example 1 is replaced with fibrous α-quartz, while the remaining parameters are the same or approximately the same as those parameters in Example 1. Since the piezoelectric performance of the fibrous α-quartz is inferior to the piezoelectric performance of the fibrous graphite phase carbon nitride, the ionic conductivity in Example 2 is lower than the ionic conductivity in Example 1.

A difference between Example 3 and Example 1 lies in that the fibrous graphite phase carbon nitride in Example 1 is replaced with the nano piezoelectric material having the core-shell structure with α-quartz as a core material and graphene as a shell material, while the remaining indexes are approximately the same. Since the ionic conductivity measured in Example 3 is higher than the ionic conductivity measured in Example 1, this material having the core-shell structure exhibits better piezoelectric performance.

A difference between Example 4 and Example 1 lies in that the fibrous graphite phase carbon nitride in Example 1 is replaced with the nano piezoelectric material having the core-shell structure with graphite phase carbon nitride as the core material and silicon dioxide as the shell material, while the remaining indexes are approximately the same. Since the ionic conductivity measured in Example 4 is equal to the ionic conductivity measured in Example 1, the piezoelectric performance of this material having the core-shell structure is equivalent to the piezoelectric performance of the fibrous graphite phase carbon nitride in Example 1.

A difference between Example 5 and Example 1 lies in that the fibrous graphite phase carbon nitride in Example 1 is replaced with the nano piezoelectric material having the core-shell structure with graphite phase carbon nitride as the core material and agar as the shell material, while the remaining indexes are approximately the same. Since the ionic conductivity measured in Example 5 is lower than the ionic conductivity measured in Example 1, the piezoelectric performance of this material having the core-shell structure is inferior to the piezoelectric performance of the fibrous graphite phase carbon nitride in Example 1.

In addition, by transversely comparing Examples 2 to 4, a thickness of a core layer and a thickness of a shell layer in Example 2 are the same as those in Example 3, and both the shell layer and the core layer in Example 4 are thicker than those in Example 2. By comparing Example 4 and Example 2, it can be seen that the shell layer in the Example 4 shields an electric field of the graphite phase carbon nitride to a greater extent, thereby reducing the ionic conductivity. By comparing Example 2 and Example 3, it can be seen that an electric field shielding capability of silicon dioxide is higher than that of graphene. Though graphite phase carbon nitride having higher electric field strength is used in Example 3, the ionic conductivity in Example 3 is lower than that in Example 2.

In Example 6, a core-shell structure material with CdS as the core and agar as the shell is used, and the remaining indexes are approximately the same as those in Example 1. Since the ionic conductivity measured in Example 6 is equal to that in Example 1, the piezoelectric performance of this core-shell structure material is equivalent to the piezoelectric performance of the fibrous graphite phase carbon nitride in Example 1.

Compared with Example 1, a polytetrafluoroethylene base film is used in Example 7, resulting in an increase of the ionic conductivity. This indicates that the polytetrafluoroethylene base film can increase the ionic conductivity and further improve the charging and discharging performance of the battery.

Compared with Example 7, the weight of the functional layer and the weight of the adhesive layer in Example 8 are increased, and the proportion of the piezoelectric nanomaterial in the functional layer is increased. Since the increase in the functional layer and the piezoelectric nanomaterial can enhance the piezoelectric performance of the separator, the ionic conductivity of the separator is increased.

In Comparative Example 1, one base film and one functional layer are disposed, and the functional layer is graphite phase carbon nitride. Since the functional layer is of bulk structure and has a low specific surface area, even though only one base film is disposed, the ionic conductivity of the functional layer is lower than the ionic conductivity in Example 1 where the piezoelectric nanomaterial is used and the piezoelectric nanomaterial is sandwiched between the two base films.

Only two base films are compounded in Comparative Example 2, and the ionic conductivity of the base film and the strength of the separator are lower than those in Example 1 where two base films are disposed and the functional layer is sandwiched between the two base films.

The remaining indexes being the same or approximately the same indicates that the differences between the indexes fall within a fluctuation range allowed by an experiment.

It can be seen that the piezoelectric material is used in the example, which not only further improves the ionic conductivity of the separator and enhances the charging and discharging performance of the battery cell including the separator, but also improves the strength of the separator due to the adhesive effect of the functional layer.

In Comparative Example 1, one base film and one functional layer are disposed, and in Comparative Example 2, two base films are disposed. In both cases, the ionic conductivity is low, and the strength of the separator is lower than the strength of the separators in all the examples.

The above description is only optional examples of the present application and is not intended to limit the patent scope of the present application. Any equivalent structural transformations made based on the content of the specification and the drawings of the present application or any direct/indirect applications in other related technical fields under the inventive concept of the present application shall all fall within the scope of patent protection of the present application.

## Claims

1. A separator, comprising at least two base films and at least one functional layer, the functional layer being disposed between two adjacent base films, and the functional layer comprising a piezoelectric material.

2. The separator according to claim 1, wherein the piezoelectric material comprises a piezoelectric nanomaterial.

3. The separator according to claim 2, wherein the piezoelectric nanomaterial comprises a piezoelectric nanomaterial having a core-shell structure and/or a piezoelectric nanomaterial having a fiber structure.

4. The separator according to claim 3, wherein a core material of the piezoelectric nanomaterial having the core-shell structure comprises at least one of quartz single crystal, LiNbO₃, ZnO, CdS, SrBi₄Ti₄O₁₅, ZnSnO₃, BaTiO₃, and graphite phase carbon nitride, and a shell material of the core-shell structure comprises at least one of silicon dioxide, graphene, epoxy resin, agar, and carboxymethyl cellulose.

5. The separator according to claim 3, wherein the nanomaterial having the fiber structure comprises at least one of quartz single crystal, LiNbO₃, ZnO, CdS, SrBi₄Ti₄O₁₅, ZnSnO₃, BaTiO₃, and graphite phase carbon nitride.

6. The separator according to claim 3, wherein a thickness of a shell material of the core-shell structure is 0.3 µm to 0.5 µm, and a particle size of a core material of the core-shell structure is 0.2 µm to 0.49 µm.

7. The separator according to claim 2, wherein the piezoelectric nanomaterial comprises polyvinylidene difluoride.

8. The separator according to any one of claims 4 to 7, wherein a specific surface area of the piezoelectric nanomaterial is greater than 200 m²/g and less than 500 m²/g.

9. The separator according to any one of claims 1 to 8, wherein three base films and two functional layers are disposed, and one functional layer is sandwiched between two base films.

10. The separator according to any one of claims 1 to 8, wherein a thickness of the base film is 3 µm to 7 µm, and a thickness of the functional layer is 0.5 µm to 2 µm.

11. The separator according to claim 10, wherein a porosity of the base film is 25% to 70%; preferably, the porosity of the base film is 30% to 65%.

12. The separator according to claim 11, wherein a pore size of the base film is 100 nm to 800 nm.

13. The separator according to any one of claims 1 to 12, wherein a material of the base film comprises at least one of polyolefin, polyether, polyetheretherketone, polyimide, a polyethylene-propylene copolymer, and a fluorocarbon compound.

14. The separator according to claim 13, wherein the fluorocarbon compound comprises at least one of polytetrafluoroethylene, polyvinyl fluoride, polyvinylidene fluoride, and polyvinylidene chloride.

15. The separator according to any one of claims 1 to 14, wherein the separator further comprises an adhesive layer, the adhesive layer bonds the functional layer and the base film, a weight of the functional layer accounts for 30% to 50% of a weight of the separator, a weight of the adhesive layer accounts for 10% to 20% of the weight of the separator, and a surface density of the separator is 2 g/m² to 10 g/m².

16. The separator according to claim 15, wherein an air permeability of the separator is 300 s/100cc to 500 s/100 cc; and/or a weight of the piezoelectric nanomaterial is 30% to 80% of the weight of the functional layer.

17. A preparation method for the separator according to any one of claims 1 to 16, comprising the following steps:
preparing a base film and a functional layer, and attaching the functional layer to a surface of the base film; and
compounding the base film and the functional layer in a pressurization manner.

18. The preparation method for the separator according to claim 17, wherein the pressurization manner is hot pressing or cold pressing; and/or
a manner of attaching the functional layer to the surface of the base film comprises coating, electrostatic spinning, or directly covering a film-shaped functional layer on the surface of the base film.

19. An electrode assembly, comprising the separator according to any one of claims 1 to 16.

20. A battery cell, comprising the electrode assembly according to claim 19.

21. A battery, comprising the battery cell according to claim 20.

22. An electric device, comprising the battery according to claim 21.
